# EUROPÄISCHE PATENTSCHRIFT

(11) **EP 4 065 263 B1**
(45) Veröffentlichungstag und Bekanntmachung des Hinweises auf die Patenterteilung: **13.09.2023**
(21) Anmeldenummer: 20816429.3
(22) Anmeldetag: 26.11.2020
(51) Int. Cl.: B01F 27/052, B01F 27/053, B01F 27/1152, B01F 29/86, B01J 2/00, B01J 2/10

(54) **MISCHWERKZEUG ZUM TROCKENMISCHEN UND COATEN**
MIXING TOOL FOR DRY MIXING AND COATING PROCESSES
OUTIL DE MÉLANGE POUR LE MÉLANGE À SEC ET PROCESSUS D'ENROBAGE

(30) Priorität: 28.11.2019 DE 102019132264
(43) Veröffentlichungstag der Anmeldung: 05.10.2022
(73) Patentinhaber: Maschinenfabrik Gustav Eirich GmbH & Co KG, D-74736 Hardheim (DE)
(72) Erfinder: GERL, Stefan, 97956 Werbach (DE); SEILER, Andreas, 97941 Tauberbischofsheim (DE); SCHMITT, Clemens, 74731 Walldürn-Altheim (DE)
(74) Vertreter: WSL Patentanwälte Partnerschaft mbB
(86) Internationale Anmeldenummer: PCT/EP2020/083521
(87) Internationale Veröffentlichungsnummer: WO 2021/105291

(56) Entgegenhaltungen:
- WO-A1-2012/123441
- DE-U1-202008 006 745
- FR-A1- 2 229 464
- US-A- 5 409 313
- US-A- 5 947 599
- US-A1- 2009 159 732

## Beschreibung

Die vorliegende Erfindung betrifft ein Werkzeug zum Trockenmischen und Coaten von Pulvermischungen. Beim Trockenmischen werden mehrere trockene und häufig pulverförmige Materialien miteinander vermischt. Beim Coaten können gröbere Pulverpartikel durch Trockenmischen bei gleichzeitigem Anlagern von deutlich feineren Partikeln auf der Oberfläche der gröberen Partikel umhüllt werden. Alternativ oder in Kombination mit den feinen Partikeln können Flüssigkeiten in sehr kleinen Mengen auf das gröbere Pulver aufgebracht werden, die die Partikeloberfläche möglichst vollständig benetzen.

Es sind aus der WO 2012/123441 A1 Wirbierwerkzeuge für Intensivmischer zur Mikrogranulierung von feuchten Feststoffmischungen bekannt, welche einen Befestigungsschaft und ein an diesem befestigtes, in etwa scheibenförmiges Element mit einem Durchmesser d, mit einer oberen Fläche, einer unteren Fläche und einer die obere und die untere Fläche verbindenden Umfangsfläche hat, wobei die Umfangsfläche eine Mehrzahl von parallel zur Schaftachse verlaufende Nuten aufweist, wobei jede Nut zwei sich von der Umfangsfläche zu einem Nutgrund erstreckende Nutwände aufweist, so dass zwischen zwei benachbarten Nuten jeweils ein Zahn ausgebildet wird.

Der Begriff der Umfangsfläche ist hier so zu verstehen, dass die Nutwände und der Nutgrund nicht Teil der Umfangsfläche sind. Die Umfangsfläche wird daher durch die eingebrachten Nuten unterbrochen. Ist das scheibenförmige Element exakt kreisförmig, liegt die Umfangsfläche auf dem Umkreis des scheibenförmigen Elementes.

Bei dem bekannten Wirblerwerkzeug steht die Drehrichtung des Werkzeuges fest. Daher ist, die in Drehrichtung vorlaufende Nutwand mit einem Hartmetallelement versehen, um den Verschleiß des Werkzeuges, insbesondere am radial äußeren Ende, zu reduzieren.

Bei der Mikrogranulierung von feuchten Feststoffmischungen ist zwar Abrieb am Werkzeug nicht gewünscht, da dies zu einer Verschlechterung der Ausbeute führt, dennoch kommt es zwangsläufig zu einem Abrieb an der nicht mit einem Hartmetallelement versehenen Nutwand. Dieser geringe Abrieb fällt ins Mischgut und wird zwangsläufig dem Produkt beigemischt, was jedoch bei den üblichen Anwendungsfällen kein Problem darstellt.

Das bekannte Werkzeug ist daher zum Trockenmischen und Coaten von Pulvermischungen, insbesondere wenn dies möglichst eisenfrei erfolgen soll, prinzipiell ungeeignet, da aufgrund des Aufbaus nicht zu verhindern ist, dass Abrieb des aus Eisen aufgebauten Werkzeuges in das Mischgut gerät, was jedoch beim kontaminationsfreien Trockenmischen unbedingt zu vermeiden ist. So ist beispielsweise bei der Herstellung von Kathodenmaterial für Energiespeicher jegliche Kontamination des Mischgutes, z.B. durch Werkzeugabrieb, zu vermeiden.

Die WO 2012/123441 A1 offenbart ein Werkzeug entsprechend dem Oberbegriff des Anspruchs 1.

Aus der US 5,409,313 A1 ist ebenfalls eine Vorrichtung zum Deagglomerieren von Pulver in einer Mischung aus Flüssigkeit und Pulver bekannt. Diese Vorrichtung enthält einen Mischbehälter, eine im Mischbehäter angeordnete Rührscheibe und eine Ablenkplatte. Die Scheibe enthält eine Vielzahl von zusammengesetzten Zähnen, die radial und abnehmbar an ihrem Umfang angebracht sind. Jeder der Verbundzähne besteht aus einem Substrat, an dem eine Frontplatte befestigt ist, die vorzugsweise aus einem keramischen Material, wie Wolframkarbid, besteht.

Es ist daher Aufgabe der vorliegenden Erfindung, ein Werkzeug bereitzustellen, das für das besonders kontaminationsarme Trockenmischen, die Trockendispergierung und das Coaten von Pulvermischungen geeignet ist.

Erfindungsgemäß wird dies durch ein Werkzeug entsprechend Anspruch 1 gelöst.

Erfindungsgemäß wird also nicht nur die Nutwand mit einem Verschleißelement belegt, die in Drehrichtung ausgerichtet ist, sondern auch die gegenüberliegende Nutwand und am besten auch die Umfangsfläche am radial äußeren Ende der Zähne. Versuche haben gezeigt, dass der Abrieb überwiegend an den Abschnitten der Nutwand erfolgt, die sich an die Umfangsfläche anschließen. Durch die Verwendung von Verschleißelementen auf beiden Nutwänden kann der Verschleiß bzw. der Abrieb deutlich reduziert werden und ein kontaminationsarmer Betrieb ist möglich.

Grundsätzlich ist es auch möglich, dass der komplette Zahn oder sogar eine Gruppe von Zähnen als Verschleißelement ausgebildet ist. Auch ist es möglich, jeden Zahn mit einer Verschleißschutzkappe auszustatten, die den Zahn umhüllt.

In all diesen Fällen wird ein an die Umfangsfläche angrenzender Abschnitt jeder Nutwand von dem mindestens einen Verschleißelement gebildet. Es können daher in einer Nut mehrere Verschleißelemente vorgesehen sein, die zumindest Abschnitte gegenüberliegender Nutwände bilden, oder ganze Zahngruppen oder auch nur einzelne Zähne können als Verschleißelement ausgebildet sein. In jedem Fall ist aber sichergestellt, dass zumindest ein an die Umfangsfläche angrenzender Abschnitt jeder Nutwand aus einem verschleißfesten Material besteht.

Unter einem verschleißfesten Material wird jedes Material verstanden, welches eine gegenüber dem Material des Grundkörpers erhöhte Verschleißbeständigkeit aufweist.

Die erfindungsgemäße Ausführung hat zudem den Vorteil, dass die Drehrichtung des Werkzeuges noch während des Betriebes gewechselt werden kann, um einen Betrieb mit möglichst geringen Staubaufwirbelungen zu erreichen.

Vorzugsweise besteht das Verschleißelement aus Hartmetall. Es sind jedoch auch andere verschleißfeste Nichteisenwerkstoffe, wie beispielsweise eine Keramik, mit Vorteil einsetzbar.

In einer weiteren bevorzugten Ausführungsform ist vorgesehen, dass beide Nutwände und vorzugsweise auch der Nutgrund von dem mindestens einen Verschleißelement gebildet wird. Mit anderen Worten ist nicht nur der an die Umfangsfläche angrenzende Abschnitt der Nutwand mit einem Verschleißelement ausgestattet bzw. wird von diesem gebildet, sondern die ganze Nutwand und vorzugsweise auch der Nutgrund. Darüber hinaus könnte auch die Umfangsfläche zwischen zwei Nuten mit einem Verschleißelement ausgestattet oder von diesem gebildet sein. Dadurch kann der Abrieb weiter reduziert werden.

In einer bevorzugten Ausführungsform ist das Verschleißelement mehrteilig ausgebildet.

Es hat sich gezeigt, dass der Nutgrund eine sich von der ersten Nutwand zu der zweiten Nutwand erstreckende Nutgrundlänge hat, welche mindestens 10 %, vorzugsweise mindestens 25 % der Nutwandlänge vom Nutgrund zur Umfangsfläche beträgt.

Darüber hinaus sollte mindestens 20%, bevorzugt mindestens 50% der Nutwandlänge von dem mindestens einen Verschleißelement gebildet werden.

Die in der oben zitierten WO 2012/123441 gezeigten V-förmigen Nuten haben beim Trockenmischen den Nachteil, dass sich unter Umständen Mischgutbestandteile, insbesondere bei kohäsiven Rohstoffen, in der Nähe des Nutgrundes ansammeln und nicht mehr an dem Mischvorgang teilnehmen. Durch die beschriebene Ausbildung des Nutgrundes ist insbesondere im Bereich des Nutgrundes die Nut deutlich größer ausgeführt, so dass die Gefahr, dass sich Mischgutbestandteile im Nutgrund festsetzen, deutlich reduziert ist.

Die Nuten sollten nicht zu klein ausgebildet sein, um eine effektive Durchmischung zu gewährleisten.

In einer weiteren bevorzugten Ausführungsform hat die Nutwand eine sich von der Umfangsfläche zum Nutgrund erstreckende Nutwandlänge, welche zwischen dem 0,05 und 0,4-fachen, vorzugsweise zwischen dem 0,1 und 0,3-fachen und am besten zwischen dem 0,15 und 0,25-fachen des Durchmessers d des scheibenförmigen Elementes beträgt.

Erfindungsgemäß ist vorgesehen, dass die untere Fläche mindestens ein Aufwirbelelement aufweist, welches über die untere Fläche vorsteht, wobei vorzugsweise mehrere Aufwirbelelemente vorgesehen sind, die besonders bevorzugt in Umfangsrichtung gleiche Winkelabstände haben.

Durch die Aufwirbelelemente wird das Mischgut, das unter die Scheibe gerät nach außen und oben gedrängt, so dass es in den Nuten nach oben strömen kann. Somit wird verhindert, dass sich am Boden des Behälters, in welchem das Werkzeug eingesetzt wird, Mischgutbestandteile absetzen und nicht mehr am Mischvorgang teilnehmen. Das Aufwirbelelement besteht vorzugsweise aus einem verschleißfesten Material, wie z.B. Hartmetall oder Keramik. Das Aufwirbelelement könnte auch aus einem gehärteten Metall, wie z.B. gehärtetem Stahl bestehen.

Es hat sich gezeigt, dass mindestens vier Aufwirbelelemente vorhanden sein sollten, um eine effektive Durchmischung zu bewirken. Am besten sind sogar zehn oder mehr Aufwirbelelemente vorgesehen.

In einer weiteren bevorzugten Ausführungsform ist vorgesehen, dass zumindest ein Aufwirbelelement zwischen zwei Positionen hin- und her bewegt werden kann, wobei das Aufwirbelelement in der ersten Position weniger weit über die untere Fläche vorsteht als in der zweiten Position.

Dabei ist das Aufwirbelelement zumindest in der zweiten Position derart befestigbar, so dass im Betrieb des Werkzeuges keine unbeabsichtigte Bewegung des Aufwirbelelementes zwischen der ersten und der zweiten Position stattfindet. Beispielsweise kann das Aufwirbelelement in der Länge verstellbar sein, so dass durch die Verstellung der Länge eine Bewegung zwischen der ersten und der zweiten Position erfolgt.

Alternativ dazu kann die Länge, mit der das Aufwirbelelement in axialer Richtung über die untere Fläche des scheibenförmigen Elementes vorsteht, auch dadurch verwirklicht werden, dass das Aufwirbelelement an dem scheibenförmigen Element angeschraubt ist und eine oder mehrere Unterlegscheiben zur Veränderung dieser Länge zwischen Aufwirbelelement und scheibenförmigen Element angeordnet werden.

Durch diese Maßnahme ist es möglich, dieses Aufwirbelelement möglichst nah an der Oberfläche des Behälters anzuordnen, in welchem das Werkzeug angeordnet wird. In der Regel ist es wünschenswert, wenn mindestens ein Aufwirbelelement und vorzugsweise zwei Aufwirbelelemente möglichst dicht am Behälterboden angeordnet sind, um diesen von Anhaftungen zu befreien. Bevorzugt beträgt der Abstand zwischen der Unterkante des Aufwirbelelementes und der Oberkante des Behälterbodens nur wenige 1/10 Millimeter bis wenige Millimeter und zwar am besten zwischen 0,2 mm und 5 mm. Die restlichen Aufwirbelelemente können dann einen wesentlich größeren Abstand zur Oberfläche des Behälterbodens besitzen.

Es kann jedoch notwendig sein, dass gesamte Werkzeug in axialer Richtung in Richtung des Bodens zu bewegen, um das Werkzeug von einem entsprechenden Antrieb oder einem Flansch mit einer Zentrierung zu trennen. Auch dies ist durch die erfindungsgemäße Maßnahme möglich, da dann die Aufwirbelelemente von der zweiten in die erste Position bewegt werden können, so dass zwischen den Aufwirbelelementen und dem Behälterboden ein größerer Abstand verbleibt und das gesamte Werkzeug axial zur Entkopplung vom Antrieb bewegt werden kann.

Dies kann auch dadurch verwirklicht werden, dass das Aufwirbelelement eine Gewindebohrung aufweist, in welche eine durch eine Durchgangsbohrung im scheibenförmigen Element greifende Schraube greift, um das Aufwirbelelement zu befestigen. Soll das Werkzeug axial in Richtung Behälterboden bewegt werden, so müssen die axial weiter vorstehenden Aufwirbelelemente von dem scheibenförmigen Element gelöst und in radialer Richtung entnommen werden.

In einer bevorzugten Ausführungsform wird auch das Aufwirbelelement von dem Verschleißelement gebildet. Beispielsweise könnte ein Verschleißelement aus einer Zahngruppe und einem einstückig angeformten, z.B. angelöteten, Aufwirbelelement bestehen.

Es hat sich gezeigt, dass das Aufwirbelelement näher an dem Befestigungsschaft angeordnet ist als der Nutgrund, wobei vorzugsweise der Abstand zwischen Befestigungsschaft und Aufwirbelelement >50 %, vorzugsweise >75 % und am besten zwischen 80 und 98 % des Abstandes zwischen Nutgrund und Befestigungsschaft beträgt.

Die vorliegende Erfindung betrifft auch eine Vorrichtung zum Trockenmischen oder Coaten von Pulvermischungen mit einem Behälter und einem darin angeordneten erfindungsgemäßen Werkzeug.

Dabei ist es bevorzugt, dass der Behälter um eine Behälterachse drehbar ist, welche von der Befestigungsschaftachse beabstandet ist, wobei vorzugsweise der Durchmesser d des scheibenförmigen Elementes zwischen 30 und 70 % des Behälterdurchmessers beträgt.

In einer weiteren bevorzugten Ausführungsform ist vorgesehen, dass das Werkzeug derart innerhalb des Behälters positioniert ist, dass der kleinste Abstand zwischen der Umfangsfläche des Werkzeuges und der Behälterwand kleiner als 10 % des Behälterdurchmessers ist.

Weitere Vorteile, Merkmale und Anwendungsmöglichkeiten werden deutlich anhand der folgenden Beschreibung einer bevorzugten Ausführungsform und der zugehörigen Figuren. Es zeigen:
- Figur 1: eine perspektivische Ansicht einer ersten Ausführungsform der Erfindung,
- Figur 2: einen Ausschnitt der ersten Ausführungsform der Erfindung,
- Figur 3: einen Ausschnitt aus einer perspektivischen Ansicht einer zweiten Ausführungsform der Erfindung und
- Figur 4: eine perspektivische Ansicht einer dritten Ausführungsform der Erfindung.

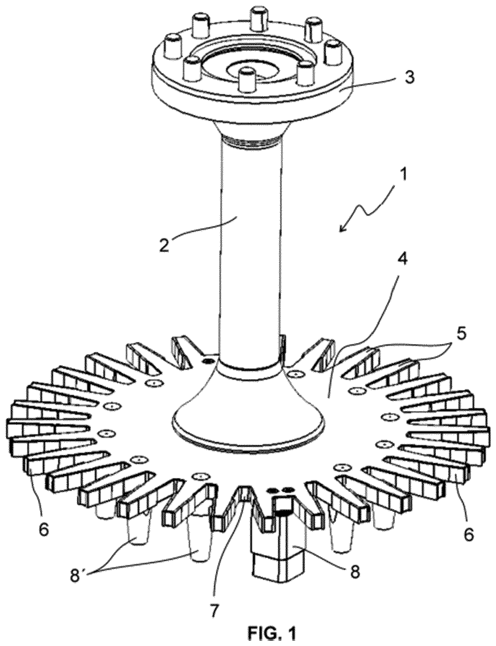

In Figur 1 ist eine perspektivische Ansicht einer ersten Ausführungsform der Erfindung gezeigt.

Das erfindungsgemäße Werkzeug 1 weist einen Befestigungsschaft 2 mit einem Flansch 3 auf. Das Werkzeug kann über den Flansch 3 an einem Antrieb (nicht gezeigt) befestigt werden und um die Achse des Befestigungsschaftes 2 gedreht werden.

An dem dem Flansch 3 abgewandten Ende des Werkzeuges 1 ist ein scheibenförmiges Element 4 angeordnet, dessen Scheibenachse mit der Achse des Befestigungsschaftes 2 zusammenfällt.

Das scheibenförmige Element hat eine obere Fläche, die in Figur 1 zu erkennen ist, eine untere Fläche, die in Figur 1 nicht zu erkennen ist und eine die obere und untere Fläche verbindende Umfangsfläche. Man erkennt, dass das scheibenförmige Element eine Mehrzahl von Zähnen 5 aufweist, die von parallel zur Schaftachse verlaufenden Nuten gebildet werden. Durch das Einbringen der Nuten in das scheibenförmige Element verbleiben zwischen den Nuten die Zähne 5. Bei der gezeigten Ausführungsform sind beide Nutwände mit einem Verschleißelement 6 aus Hartmetall belegt. An jeder Nutwand sind in der gezeigten Ausführungsform drei Teile des Verschleißelementes 6 angebracht. Dabei sind die radial äußeren Verschleißelementteile an dem Abschnitt der Nutwand angeordnet, welcher sich an die Umfangsfläche anschließt. Alle weiteren Verschleißelemente auf einer Nutwand schließen sich bevorzugt unmittelbar zum Nutgrund hin, dem radial weiter außen positionierten Verschleißelementteil an. Der Nutgrund 7 ist bei dieser Ausführungsform nicht mit dem Verschleißelement belegt.

Es ist aber durchaus möglich, die vollständigen Nutwände und den Nutgrund aber auch die Umfangsfläche zwischen zwei Nuten mit dem Verschleißelement oder mit mehreren Verschleißelementen zu belegen, um den Abrieb zu reduzieren. Alle anderen Teile des Mischwerkzeugs, die mit dem Mischgut in Kontakt treten können, wie z.B. der Befestigungsschaft und das scheibenförmige Element, werden in einer bevorzugten Ausführungsform durch Aufbringen einer verschleißbeständigen Schicht gegen Verschleiß geschützt. Die Schicht kann durch z.B. eine Oberflächenhärtung oder aber mittels einer Beschichtung erzeugt werden. Die Beschichtung kann dabei aus einem Kunststoff, wie z.B. Polyurethan, oder aber aus einer Oberflächenhärtung bestehen. Besonders bevorzugt ist eine Sprühbeschichtung, mit der eine Keramik oder ein Hartmetall beschichtet wird. Die Schichtstärke der Sprühbeschichtung sollte dabei möglichst mindestens 0,1 mm und besonders bevorzugt mehr als 0,4 mm betragen. Darüber hinaus ist es von Vorteil, wenn die Oberflächenrauigkeit der Beschichtung derart gewählt wird, dass eine wenige Partikellagen dicke Schicht des Produktes anhaftet, was das Werkzeug vor Abrieb und somit vor Verschleiß schützt.

An der unteren Fläche des scheibenförmigen Elementes sind Aufwirbelelemente 8 und 8' angeordnet, welche über die untere Fläche vorstehen. In dem gezeigten Beispiel ist ein Aufwirbelelemente 8 höhenverstellbar, d.h. es ist derart ausgebildet, dass es zwischen zwei Positionen hin- und her bewegt bzw. in der Länge verstellt werden kann, wobei das Aufwirbelelement 8 in der ersten Position weniger weit über die untere Fläche hervorsteht wie in der zweiten Position.

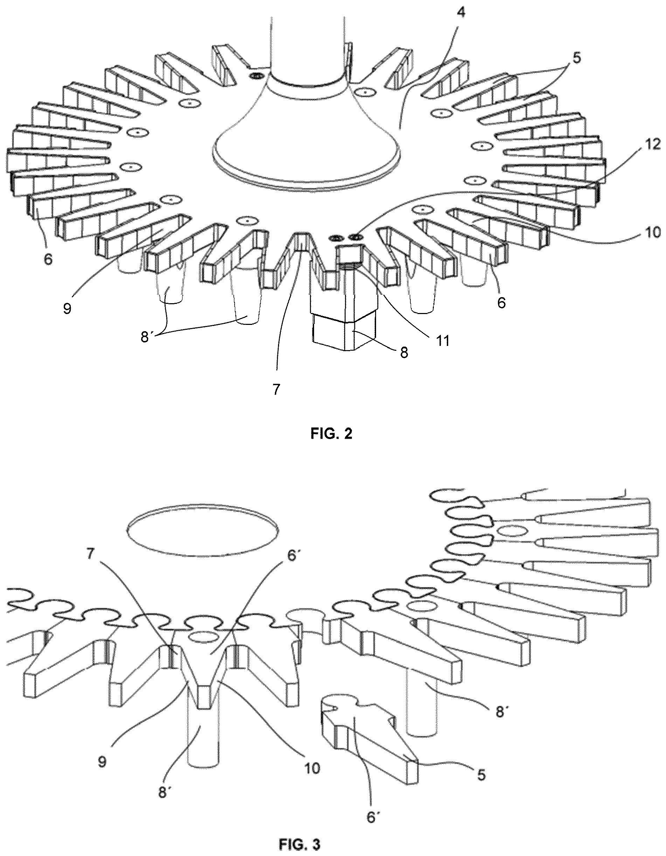

Die Figur 2 zeigt eine Nahansicht des scheibenförmigen Elementes mit Aufwirbelelementen gemäß Figur 1. Das Aufwirbelelement 8 ist über eine lösbare Schraubverbindung 12 an dem scheibenförmigen Element 4 befestigt. Um den Abstand zum Behälterboden möglichst klein einstellen und um Fertigungstoleranzen ausgleichen zu können, werden zwischen dem Aufwirbelelement 8 und dem scheibenförmigen Element 4 ein oder mehrere Unterlegscheiben 11 eingebracht. Sind die Fertigungstoleranzen sehr klein, so kann auf die Unterlegscheiben vollständig verzichtet werden.

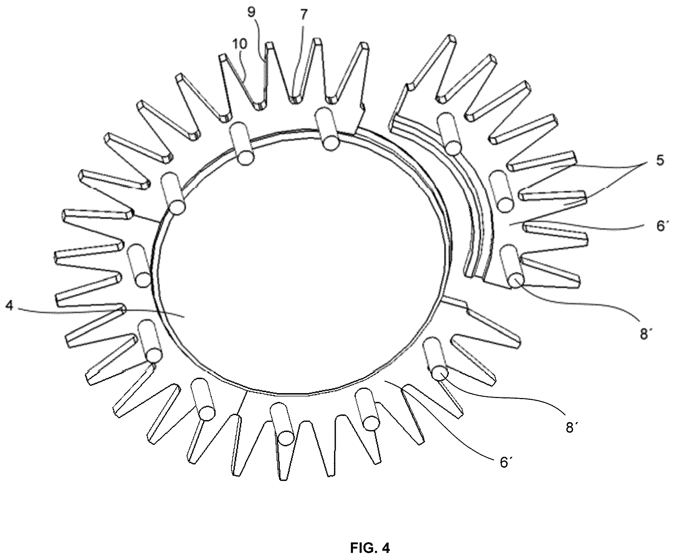

In den Figuren 3 und 4 sind Ansichten zweier weiterer Ausführungsformen der Erfindung gezeigt. Figur 3 zeigt eine perspektivische Ansicht von oben auf das Werkzeug, während Figur 4 eine Ansicht von unten auf das Werkzeug zeigt.

Soweit möglich wurden gleiche Bezugszahlen für gleiche Elemente wie in Figur 1 verwendet. Das Werkzeug in Figur 3 und Figur 4 unterscheidet sich von der Ausführungsform von Figur 1 einerseits durch die Aufwirbelelemente 8', die in dieser Ausführungsform nicht in der Höhe verstellbar sind und durch die Ausbildung der Verschleißelementteile 6`.

Figur 3 zeigt eine Variante der Erfindung, bei der das Verschleißelement 6' aus einzelnen Zähnen besteht, die bspw. komplett aus einer Keramik gefertigt sind. Die Verschleißelemente 6'werden in entsprechende Ausnehmungen in die Grundplatte über einen Zapfen an einem Ende des Verschleißelementes formschlüssig eingehängt, so dass sie sich nicht in radialer Richtung bewegen können. Eine vertikale Bewegung des Verschleißelementes in der Ausnehmung kann beispielsweise durch eine kreisförmige oder kreisringförmige Deckplatte auf der Ober- und der Unterseite der Grundplatte, die die Ausnehmung teilweise oder vollständig überdeckt, verhindert werden. Das dem Zapfen gegenüberliegende Ende des Verschleißelementes ist der Zahn 5 mit den Nutwänden 9 und 10 sowie dem Nutgrund 7. Die Aufwirbelelemente 8' können an den Verschleißelementen 6' befestigt sein.

Wie insbesondere in Figur 4 zu erkennen ist, besteht das Verschleißelement hier aus einer Vielzahl von Verschleißelementteilen 6', die ihrerseits jeweils sieben Zähne 5 des Werkzeuges ausbilden. Mit anderen Worten ist bei dieser Ausführungsform nicht nur der Nutgrund 7 und die Nutwände 9, 10 mit einem Verschleißelement, z.B. aus Hartmetall belegt, sondern der vollständige Zahn, d.h. das gesamte Verschleißelementteil 6' ist hier aus z.B. Hartmetall hergestellt. In Figur 4 ist die untere Fläche des im Wesentlichen scheibenförmigen Elements zu erkennen. Zudem ist ersichtlich, dass die Aufwirbelelemente 8' an den Verschleißelementteilen 6' befestigt sind.

### Bezugszeichenliste

- 1: Werkzeug
- 2: Befestigungsschaft
- 3: Flansch
- 4: scheibenförmiges Element
- 5: Zähne
- 6, 6': Verschleißelement
- 7: Nutgrund
- 8, 8': Aufwirbelelemente
- 9: Nutwand
- 10: Nutwand
- 11: Unterlegscheibe
- 12: Schraubverbindung

## Patentansprüche

1. Werkzeug (1) zum Trockenmischen und Coaten von Pulvermischungen mit einem Befestigungsschaft (2) und einem an diesem befestigten, in etwa scheibenförmigen Element (4) mit einem Durchmesser d, mit einer oberen Fläche, einer unteren Fläche und einer die obere und die untere Fläche verbindende Umfangsfläche, wobei das scheibenförmige Element (4) eine Mehrzahl von parallel zur Schaftachse verlaufende Nuten aufweist, wobei jede Nut zwei sich von der Umfangsfläche zu einem Nutgrund (7) erstreckende Nutwände (9,10) aufweist, wobei zwischen zwei Nuten ein Zahn (5) ausgebildet wird, wobei das scheibenförmige Element (4) ein Grundteil und mindestens ein am Grundteil befestigtes Verschleißelement (6,6`) aufweist, wobei die untere Fläche mindestens ein Aufwirbelelement (8,8') aufweist, welches über die untere Fläche vorsteht, wobei das Aufwirbelelement (8,8') näher an dem Befestigungsschaft (2) angeordnet ist als der Nutgrund (7),
**dadurch gekennzeichnet,**
**dass** zumindest ein an die Umfangsfläche angrenzender Abschnitt jeder Nutwand (9, 10) von dem Verschleißelement (6, 6') gebildet wird.

2. Werkzeug (1) nach Anspruch 1, **dadurch gekennzeichnet, dass** das Verschleißelement (6,6`) aus Hartmetall oder einem anderen verschleißfesten Nichteisenwerkstoff besteht.

3. Werkzeug (1) nach Anspruch 1 oder 2, **dadurch gekennzeichnet, dass** beide Nutwände (9,10) und vorzugsweise auch der Nutgrund (7) von dem Verschleißelement (6,6') gebildet wird.

4. Werkzeug (1) nach einem der Ansprüche 1-3, **dadurch gekennzeichnet, dass** das Verschleißelement (6,6') mehrteilig ausgebildet ist.

5. Werkzeug (1) nach einem der Ansprüche 1-4, **dadurch gekennzeichnet, dass** der Nutgrund (7) eine sich von der ersten Nutwand (9) zu der zweiten Nutwand (10) erstreckende Nutgrundlänge hat, welche mindestens 10 %, vorzugsweise mindestens 25 % der Nutwandlänge vom Nutgrund (7) zur Umfangsfläche beträgt.

6. Werkzeug (1) nach einem der Ansprüche 1-5, **dadurch gekennzeichnet, dass** die Nutwand (9,10) eine sich von der Umfangsfläche zum Nutgrund (7) erstreckende Nutwandlänge hat, welche zwischen dem 0,05- und 0,4-fachen, vorzugsweise zwischen dem 0,1- und 0,3-fachen und am besten zwischen dem 0,15- und 0,25- fachen des Durchmessers d beträgt.

7. Werkzeug (1) nach einem der Ansprüche 1-6, **dadurch gekennzeichnet, dass** mehrere Aufwirbelelemente (8,8') vorgesehen sind, die besonders bevorzugt in Umfangsrichtung gleiche Winkelabstände haben.

8. Werkzeug (1) nach Anspruch 1, **dadurch gekennzeichnet, dass** zumindest ein Aufwirbelelement (8,8') zwischen zwei Positionen hin und her bewegt oder in der Länge verändert werden kann, wobei das Aufwirbelelement (8,8') in der ersten Position weniger weit über die untere Fläche vorsteht als in der zweiten Position.

9. Werkzeug (1) nach einem der Ansprüche 1-8, **dadurch gekennzeichnet, dass** das Aufwirbelelement (8,8') von dem Verschleißelement (6,6') gebildet wird.

10. Werkzeug (1) nach einem der Ansprüche 1-9, **dadurch gekennzeichnet, dass** der Abstand zwischen Befestigungsschaft (2) und Aufwirbelelement (8,8`) >50 %, vorzugsweise >75 % und am besten zwischen 80 und 98 % des Abstandes zwischen Nutgrund (7) und Befestigungsschaft (2) beträgt.

11. Vorrichtung zum Trockenmischen oder Coaten von Pulvermischungen mit einem Behälter und einem darin angeordneten Werkzeug (1) nach einem der Ansprüche 1-10.

12. Vorrichtung nach Anspruch 11, **dadurch gekennzeichnet, dass** der Behälter um eine Behälterachse drehbar ist, welche von der Befestigungsschaftachse beabstandet ist, wobei vorzugsweise der Durchmesser d des scheibenförmigen Elementes (4) zwischen 30 und 70 % des Behälterdurchmessers beträgt.

13. Vorrichtung nach Anspruch 11 oder 12, **dadurch gekennzeichnet, dass** das Werkzeug (1) derart innerhalb des Behälters positioniert ist, dass der kleinste Abstand zwischen der Umfangsfläche des Werkzeuges (1) und der Behälterwand kleiner als 10% des Behälterdurchmessers ist.

14. Vorrichtung nach einem der Ansprüche 11 bis 13, **dadurch gekennzeichnet, dass** ein Abstand zwischen einer Unterkante des Aufwirbelelementes (8,8') und einer Oberkante des Behälterbodens nur wenige 1/10 Millimeter bis wenige Millimeter, bevorzugt zwischen 0,2 mm und 5 mm beträgt.

## Claims

1. A tool (1) for dry mixing and coating of powder mixtures comprising a fixing shaft (2) and an approximately disc-shaped element (4) fixed thereto and of a diameter d, having an upper surface, a lower surface and a peripheral surface connecting the upper and lower surfaces, wherein the disc-shaped element (4) has a plurality of grooves extending parallel to the shaft axis, wherein each groove has two groove walls (9, 10) extending from the peripheral surface to a groove bottom (7), wherein a tooth (5) is formed between two grooves, wherein the disc-shaped element (4) has a base portion and at least one wear element (6, 6') fixed to the base portion, wherein the lower surface has at least one whirling-up element (8, 8') which projects beyond the lower surface, wherein the whirling-up element (8, 8') is arranged closer to the fixing shaft (2) than to the groove bottom (7), **characterised in that** at least one portion of each groove wall (9, 10), that adjoins the peripheral surface, is formed by the wear element (6, 6').

2. The tool (1) according to claim 1 **characterised in that** the wear element (6, 6') comprises carbide or another wear-resistant non-ferrous material.

3. The tool (1) according to claim 1 or claim 2 **characterised in that** both groove walls (9, 10) and preferably also the groove bottom (7) is formed by the wear element (6, 6').

4. The tool (1) according to one of claims 1 to 3 **characterised in that** the wear element (6, 6') is of a multi-part configuration.

5. The tool (1) according to one of claims 1 to 4 **characterised in that** the groove bottom (7) is of a groove bottom length which extends from the first groove wall (9) to the second groove wall (10) and which is at least 10%, preferably at least 25%, of the groove wall length from the groove bottom (7) to the peripheral surface.

6. The tool (1) according to one of claims 1 to 5 **characterised in that** the groove wall (9, 10) is of a groove wall length extending from the peripheral surface to the groove bottom (7), which is between 0.05 and 0.4 times, preferably between 0.1 and 0.3 times, and best between 0.15 and 0.25 times the diameter d.

7. The tool (1) according to one of claims 1 to 6 **characterised in that** a plurality of whirling-up elements (8, 8') is provided which particularly preferably are at angular spacings which are equal in the peripheral direction.

8. The tool (1) according to claim 1 **characterised in that** at least one whirling-up element (8, 8') can be reciprocated between two positions or can be varied in length, wherein the whirling-up element (8, 8') projects beyond the lower surface less in the first position than in the second position.

9. The tool (1) according to one of claims 1 to 8 **characterised in that** the whirling-up element (8, 8') is formed by the wear element (6, 6').

10. The tool (1) according to one of claims 1 to 9 **characterised in that** the spacing between the fixing shaft (2) and the whirling-up element (8, 8') is >50%, preferably >75% and best between 80 and 98% of the spacing between the groove bottom (7) and the fixing shaft (2).

11. An apparatus for dry mixing or coating of powder mixtures comprising a container and a tool (1) arranged therein according to one of claims 1 to 10.

12. The apparatus according to claim 11 **characterised in that** the container is rotatable about a container axis spaced from the fixing shaft axis, wherein preferably the diameter d of the disc-shaped element (4) is between 30 and 70% of the container diameter.

13. The apparatus according to claim 11 or claim 12 **characterised in that** the tool (1) is positioned within the container in such a way that the shortest spacing between the peripheral surface of the tool (1) and the container wall is less than 10% of the container diameter.

14. The apparatus according to one of claims 11 to 13, **characterised in that** a spacing between a lower edge of the whirling-up element (8, 8') and an upper edge of the container bottom comprises only a few 1/10 millimeters to a few millimeters, preferably between 0.2 mm and 5 mm.

## Revendications

1. Outil (1) pour le mélange à sec et l'enrobage de mélanges de poudres, avec une tige de fixation (2) et avec un élément (4) en forme de disque fixé sur ladite tige et ayant un diamètre d, avec une surface supérieure, une surface inférieure et une surface circonférentielle reliant la surface supérieure à la surface inférieure, l'élément (4) en forme de disque comprenant une pluralité de rainures s'étendant parallèlement à l'axe de la tige, chaque rainure comprenant deux parois de rainure (9, 10) s'étendant de la surface circonférentielle jusqu'à un fond de rainure (7), une dent (5) étant formée entre deux rainures, l'élément (4) en forme de disque comprenant une pièce de base et au moins un élément d'usure (6, 6') fixé sur la pièce de base, la surface inférieure comprenant au moins un élément de tourbillonnement (8, 8') qui dépasse de la surface inférieure, l'élément de tourbillonnement (8, 8') étant disposé plus proche de la tige de fixation (2) que le fond de rainure (7),
**caractérisé en ce qu'**au moins une partie de chaque paroi de rainure (9, 10) adjacente à la surface circonférentielle est constituée par l'élément d'usure (6, 6').

2. Outil (1) selon la revendication 1, **caractérisé en ce que** l'élément d'usure (6, 6') est constitué d'un métal dur ou d'une autre matière non ferreuse résistante à l'usure.

3. Outil (1) selon la revendication 1 ou 2, **caractérisé en ce que** les deux parois de rainure (9, 10) et, de préférence, aussi le fond de rainure (7) sont constitués par l'élément d'usure (6, 6').

4. Outil (1) selon l'une des revendications 1 à 3, **caractérisé en ce que** l'élément d'usure (6, 6') est constitué de plusieurs pièces.

5. Outil (1) selon l'une des revendications 1 à 4, **caractérisé en ce que** le fond de rainure (7) a une longueur de fond de rainure allant de la première paroi de rainure (9) à la deuxième paroi de rainure (10), qui est au moins 10 %, de préférence au moins 25 % de la longueur de paroi de rainure du fond de rainure (7) jusqu'à la surface circonférentielle.

6. Outil (1) selon l'une des revendications 1 à 5, **caractérisé en ce que** la paroi de rainure (9, 10) a une longueur de paroi de rainure allant de la surface circonférentielle au fond de rainure (7), qui est entre 0,05 fois et 0,4 fois, de préférence entre 0,1 fois et 0,3 fois et le mieux entre 0,15 fois et 0,25 fois le diamètre d.

7. Outil (1) selon l'une des revendications 1 à 6, **caractérisé en ce que** plusieurs éléments de tourbillonnement (8, 8') sont prévus qui ont, de préférence, en direction circonférentielle, des distances angulaires égales.

8. Outil (1) selon la revendication 1, **caractérisé en ce qu'**au moins un élément de tourbillonnement (8, 8') peut être déplacé en aller-retour entre deux positions ou peut être changé en ce qui concerne sa longueur, l'élément de tourbillonnement (8, 8') dépassant de la surface inférieure moins loin dans la première position que dans la deuxième position.

9. Outil (1) selon l'une des revendications 1 à 8, **caractérisé en ce que** l'élément de tourbillonnement (8, 8') est constitué par l'élément d'usure (6, 6').

10. Outil (1) selon l'une des revendications 1 à 9, **caractérisé en ce que** la distance entre la tige de fixation (2) et l'élément de tourbillonnement (8, 8') est de >50 %, de préférence de >75 % et le mieux entre 80 % et 98 % de la distance entre le fond de rainure (7) et la tige de fixation (2).

11. Dispositif pour mélanger à sec ou enrober des mélanges de poudres, avec un contenant et un outil (1) selon l'une des revendications 1 à 10 disposé dans le contenant.

12. Dispositif selon la revendication 11, **caractérisé en ce que** le contenant est rotatif autour d'un axe de contenant qui est espacé de l'axe de la tige de fixation, le diamètre de l'élément (4) en forme de disque étant de préférence entre 30 et 70 % du diamètre du contenant.

13. Dispositif selon la revendication 11 ou 12, **caractérisé en ce que** l'outil (1) est positionné à l'intérieur du contenant de façon telle que la distance la plus petite entre la surface circonférentielle de l'outil (1) et la paroi de contenant est inférieure à 10 % du diamètre de contenant.

14. Dispositif selon l'une des revendications 11 à 13, **caractérisé en ce qu'**une distance entre un bord inférieur de l'élément de tourbillonnement (8, 8') et un bord supérieur du fond de contenant n'est que de quelques dixièmes de millimètre à quelques millimètres, de préférence entre 0,2 mm et 5 mm.
